# FASCICULE DE BREVET EUROPEEN

(11) **EP 2 253 604 B1**
(45) Date de publication et mention de la délivrance du brevet: **19.02.2020**
(21) Numéro de dépôt: 10162510.1
(22) Date de dépôt: 11.05.2010
(51) Int. Cl.: C04B 35/83, F16D 69/02

(54) **Piece à base de matériau composite c/c et procédé pour sa fabrication**
Teil auf der Basis eines keramischen Faserverbundstoffmaterials und sein Herstellungsverfahren
Part made from a C/C composite material and method for manufacturing same

(30) Priorité: 13.05.2009 FR 0953155
(43) Date de publication de la demande: 24.11.2010
(73) Titulaire: Safran Landing Systems, 78140 Vélizy-Villacoublay (FR)
(72) Inventeur: Baud, Sandrine, 69006 LYON (FR); Jacquemard, Pascale, 69780 SAINT PIERRE DE CHANDIEU (FR); Pailler, René, 33610 CESTAS (FR); Rollin, Magali, 60410 VERBERIE (FR); Podgorski, Michaël, 33000 BORDEAUX (FR)
(74) Mandataire: Cabinet Beau de Loménie

(56) Documents cités:
- EP-A2- 0 507 564
- WO-A-2006/067184
- US-A1- 2005 051 394

## Description

### Arrière-plan de l'invention

L'invention concerne des pièces à base de matériau composite carbone/carbone (C/C), en particulier des pièces de friction telles que des disques de freins d'avions. L'invention n'est toutefois pas limitée à cette application et vise aussi d'autres types de pièces en matériau composite C/C, notamment celles pour lesquelles des propriétés mécaniques améliorées sont recherchées.

Des disques de freins d'avions en matériau composite C/C sont largement utilisés. La fabrication de tels disques comporte habituellement une étape de réalisation d'une préforme fibreuse en fibres de carbone ayant une forme voisine de celle d'un disque à fabriquer et destinée à constituer le renfort fibreux du matériau composite, et la densification de la préforme par une matrice en carbone.

Un procédé bien connu pour la réalisation d'une préforme fibreuse en fibres de carbone comprend la superposition de strates fibreuses en fibres de précurseur de carbone, par exemple en polyacrylonitrile (PAN) préoxydé, la liaison des strates entre elles, par exemple par aiguilletage, et la réalisation d'un traitement thermique de carbonisation pour transformer le précurseur en carbone. On pourra se référer, entre autres, au document US 5 792 715.

La densification de la préforme par une matrice carbone peut être effectuée par infiltration chimique en phase gazeuse ou CVI ("Chemical Vapour Infiltration"). Des préformes sont placées dans une enceinte dans laquelle est admise une phase gazeuse contenant un ou plusieurs précurseurs de carbone, par exemple du méthane et/ou du propane. La température et la pression dans l'enceinte sont contrôlées pour permettre à la phase gazeuse de diffuser au sein des préformes et d'y former un dépôt solide de carbone pyrolytique (PyC) par décomposition du ou des précurseurs. Un procédé de densification d'une pluralité de préformes annulaires de disques de frein disposées en piles est décrit, entre autres, dans le document US 5 904 957.

La densification par une matrice carbone peut aussi être effectuée par voie liquide, c'est-à-dire par imprégnation de la préforme par un précurseur de carbone, typiquement une résine, et pyrolyse du précurseur, plusieurs cycles d'imprégnation et pyrolyse étant habituellement réalisés.

On connaît aussi un procédé de densification dit par "caléfaction" selon lequel une préforme de disque à densifier est immergée dans un bain de précurseur de carbone, par exemple du toluène, et est chauffée, par exemple par couplage avec un inducteur, de sorte que le précurseur vaporisé au contact de la préforme diffuse au sein de celle-ci pour former un dépôt PyC par décomposition. Un tel procédé est décrit entre autres dans le document US 5 389 152.

Parmi les différentes propriétés recherchées de disques de frein à base de matériau composite C/C, une faible usure est hautement désirable.

Pour améliorer la résistance à l'usure, l'introduction de grains en céramique dans le matériau composite C/C a été largement proposée.

Ainsi, dans le document US 6 376 431, il est décrit l'imprégnation d'une préforme en fibres de carbone par une solution type sol-gel contenant un précurseur de silice (SiO₂) qui, après traitement thermique et réaction chimique avec le carbone, laisse des grains de carbure de silicium (SiC) distribués dans la préforme, ces grains ne représentant, dans le matériau composite C/C final, pas plus de 1 % en poids.

Le document WO 2006/067184 préconise de réaliser une imprégnation par une solution type sol-gel ou suspension colloïdale sur la texture fibreuse des strates utilisées pour réaliser la préforme afin d'obtenir une dispersion de grains d'oxydes tels que des oxydes de titane (TiO₂), de zirconium (ZrO₂), d'hafnium (HfO₂) et de silicium (SiO₂). Un traitement thermique ultérieur transforme ces grains d'oxyde en grains de carbure.

Le document EP 1 748 036 décrit l'imprégnation d'un substrat en fibres de carbone par une barbotine contenant une résine précurseur de carbone et des grains d'oxyde métallique, par exemple SiO₂, TiO₂, ZrO₂, .... Après traitement thermique, un matériau composite C/C est obtenu contenant des grains de carbure obtenus par transformation des particules d'oxydes. Les exemples indiquent l'utilisation de grains d'oxyde de plusieurs microns.

Le document EP 0 507 564 décrit la réalisation d'une pièce en matériau composite type C/C par mélange de fibres carbonées, de poudre céramique et de poudre de carbone, moulage et frittage, la poudre céramique étant par exemple un oxyde tel que SiO₂, TiO₂, ZrO₂, ...., ou un nitrure. L'utilisation de poudre de ZrO₂ formée de grains d'un micron est mentionnée en exemple 2, la quantité de ZrO₂ dans le matériau composite final étant de 6,2 %. On note que, parmi les poudres céramiques envisagées, ZrO₂ est loin de donner les meilleurs résultats en usure.

Le document EP 0 404 571 décrit un procédé similaire à celui de EP 0 507 564 mais pour former une pièce de glissement à faible coefficient de frottement.

### Objet et résumé de l'invention

La présente invention vise à proposer un procédé permettant l'obtention d'une pièce à base de matériau composite C/C à propriétés améliorées incorporant des grains en céramique, notamment une pièce de friction présentant une faible usure et un coefficient de friction adapté à l'application au freinage et stable, notamment lors de freinage à haute énergie.

Ce but est atteint grâce à un procédé tel que défini par la revendication 1.

Par "majoritairement", on entend ici que les phases ZrO_{X}C_{y} représentent plus de 50 % en masse, de préférence plus de 90 % en masse, des grains ou cristallites de céramique dispersés au sein de la pièce. Peuvent être présents en quantité minoritaire des composés du système Zr-O-C autres que les composés de type ZrOₓC_{Y} tels que définis ci-avant et des systèmes contenant Zr, O, C et un ou plusieurs autres éléments, par exemple de l'azote N.

Comme cela sera montré dans la description détaillée, ce procédé est remarquable en ce que, dans le cas d'une pièce de friction, il permet une diminution globale d'usure très importante en comparaison avec une pièce de friction en matériau composite C/C usuel sans incorporation de grains en céramique, en particulier lors de freinages à basse énergie qui sont une composante principale d'usure pour des disques de freins d'avion à base de matériau composite C/C.

Comme cela sera également montré dans la description détaillée, le procédé est remarquable aussi en ce qu'il permet d'obtenir de très bonnes propriétés mécaniques, ce qui présente un intérêt particulier pour des pièces à base de matériau composite C/C quelle que soit leur destination.

Selon un mode de réalisation, l'imprégnation est réalisée par une solution de type sol-gel contenant un ou plusieurs précurseur(s) de zircone ZrO₂.

L'imprégnation est avantageusement réalisée pour avoir, dans la pièce finale, des cristallites nanométriques avec une dimension moyenne inférieure à 200 nanomètres, par exemple de quelques nanomètres à quelques dizaines de nanomètres, qui forment des agrégats ou grains de plusieurs microns répartis dans tout le volume de la pièce.

Un composé organique du zirconium peut être utilisé comme précurseur de ZrOₓC_{y}, par exemple du butoxyde de zirconium précurseur de zircone.

La solution de type sol-gel peut aussi comprendre un ou plusieurs composé(s) précurseur(s) de C, notamment du saccharose.

Après imprégnation, un traitement thermique est réalisé pour décomposer le ou les précurseur(s) et stabiliser le ou les composé(s) du zirconium sous une forme cristallisée. Le traitement thermique peut être réalisé à une température atteignant entre 600°C et 1700°C, de préférence entre 900°C et 1550°C. La durée du traitement thermique peut être comprise entre 1 h et quelques dizaines d'heures, de préférence entre 2 h et 5 h, une durée relativement courte pouvant être choisie notamment lorsque l'imprégnation et le traitement thermique sont suivis d'un processus de densification par CVI à une température qui est usuellement d'environ 1 000°C, le traitement thermique et la densification par CVI pouvant être enchaînés dans un même four.

Lors du traitement thermique, des composés appartenant au système Zr-O-C peuvent être formés soit à partir d'un précurseur contenu dans la solution de type sol-gel, soit par réaction entre un composé du zirconium, par exemple de la zircone, issu d'un précurseur et du carbone. Le carbone peut être celui des fibres ou d'une phase de matrice déjà présente, ou encore du carbone issu d'un composant de la solution de type sol-gel, en particulier issu de saccharose. Le traitement thermique global, y compris éventuellement l'exposition à température élevée lors d'un processus CVI, est contrôlé pour obtenir en final un ou plusieurs composé(s) du zirconium de type majoritairement ZrOₓC_{y} tel que 1 ≤ x ≤ 2 et 0 ≤ y ≤ 1.

Selon un autre mode de réalisation, l'imprégnation est réalisée par une suspension colloïdale contenant des particules d'un ou plusieurs composé(s) du zirconium, par exemple une suspension colloïdale de zircone.

Un traitement thermique peut alors éventuellement être réalisé si nécessaire pour stabiliser le ou les composé(s) du zirconium sous forme cristallisée, comme cela est bien connu en soi pour la zircone. Lors du traitement thermique, une interaction chimique limitée peut éventuellement se produire avec le carbone des fibres ou d'une phase de matrice déjà présente. Le traitement thermique éventuel est de préférence limité à l'obtention de la stabilisation et est de toute façon contrôlé pour obtenir en final un ou plusieurs composé(s) du zirconium de type majoritairement ZrOₓC_{y} avec 1 ≤ x ≤ 2 et 0 ≤ y ≤ 1.

Selon un mode de réalisation, l'imprégnation est réalisée avant densification, sur la préforme fibreuse ou sur une texture fibreuse utilisée pour former des strates qui sont superposées et liées entre elles pour constituer la préforme fibreuse. Après traitement thermique éventuel, les fibres sont alors recouvertes totalement ou partiellement de grains de composé(s) du zirconium qui contribuent aussi à combler partiellement les pores de la préforme lorsque l'imprégnation est réalisée au stade préforme.

Selon un autre mode de réalisation, l'imprégnation est réalisée entre deux cycles de densification lorsque celle-ci est réalisée en plusieurs cycles consécutifs, les grains de composé(s) du zirconium couvrant partiellement ou totalement la phase de matrice carbone qui densifie en partie la pièce et comblant en partie les pores résiduels.

Selon un autre aspect, l'invention vise aussi une pièce selon la revendication 12.

Le brevet décrit encore une pièce, notamment une pièce de friction, à base de matériau composite C/C comprenant des grains de céramique dispersés au sein du matériau, les grains représentant une fraction massique comprise entre 1 % et 10 % et étant formés d'un ou de plusieurs composé(s) du zirconium de type au moins majoritairement ZrOₓC_{y} avec 1 ≤ x ≤ 2 et 0 ≤ y ≤ 1.

Le ou les composé(s) du zirconium peuvent se présenter sous la forme de cristallites nanométriques de dimension moyenne inférieure à 200 nanomètres, par exemple de quelques nanomètres à quelques dizaines de nanomètres, formant des agrégats ou grains de plusieurs microns répartis dans tout le volume de la pièce.

### Brève description des dessins

Des modes de réalisation seront décrits plus loin de façon détaillée. Il sera fait référence aux dessins annexés, sur lesquels :
- la figure 1 indique des étapes successives d'un mode particulier de mise en œuvre d'un procédé selon l'invention,
- les figures 2 à 4 indiquent des étapes successives d'autres modes particuliers de mise en œuvre d'un procédé selon l'invention, et
- la figure 5 montre des courbes représentatives de la variation d'usure mesurée en fonction de la température pour plusieurs exemples de réalisation de pièces de friction selon l'invention ou non.

### Description détaillée de modes de réalisation

Dans la description qui suit, il est plus particulièrement envisagé la réalisation de disques à base de matériau composite C/C pour des freins d'avion. Toutefois, l'invention est applicable à la réalisation d'autres pièces de friction à base de matériau composite C/C, telles que des disques de frein pour des véhicules terrestres, notamment des automobiles, et des pièces de friction autres que des disques, notamment des patins. Plus généralement, l'invention est applicable à la réalisation de pièces à base de matériau composite C/C non nécessairement destinées à être utilisées en tant que pièces de friction.

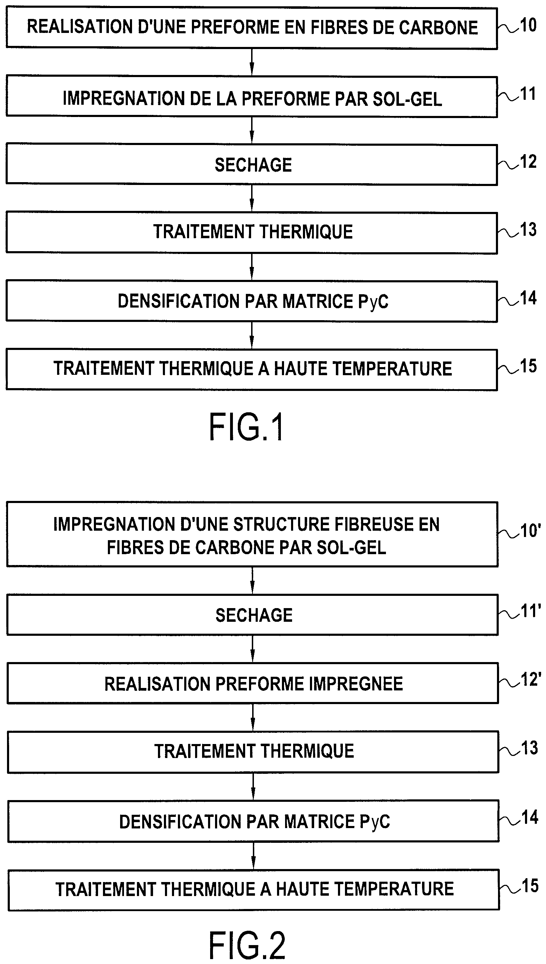

Un premier exemple de mise en œuvre d'un procédé selon l'invention est illustré par la figure 1.

Une première étape 10 consiste à réaliser une préforme en fibres de carbone pour disque de frein. Une telle préforme est par exemple réalisée par superposition de strates découpées dans une texture fibreuse en fibres de précurseur de carbone, liaison des strates entre elles par aiguilletage et transformation du précurseur en carbone par traitement thermique. En variante, on peut aussi réaliser une préforme annulaire par enroulement en spires superposées d'un tissu hélicoïdal en fibres de précurseur de carbone, liaison des spires entre elles par aiguilletage et transformation du précurseur par traitement thermique. On pourra par exemple se référer aux documents US 5 792 715, US 6 009 605 et US 6 363 593. On peut aussi réaliser les préformes directement à partir de strates de texture fibreuse en fibres de carbone qui sont superposées et liées entre elles par exemple par aiguilletage.

A l'étape 11, la préforme est imprégnée par un liquide formé d'une solution de type sol-gel comprenant un ou plusieurs précurseur(s) permettant la formation et la dispersion au sein de la préforme de grains ou cristallites d'un ou plusieurs composé(s) du zirconium appartenant au moins majoritairement au système Zr-O-C.

Au moins un précurseur peut être sous forme d'un composé alkoxyde du zirconium, tel que du butoxyde de zirconium précurseur de zircone ZrO₂. D'autres précurseurs de zircone peuvent être utilisés tels que le propoxyde de zirconium, le tétrachlorure de zirconium ou le nitrate de zirconium. La solution de type sol-gel peut aussi comprendre un précurseur de carbone, par exemple du saccharose. D'autres précurseurs de carbone peuvent être utilisés tels que le méthylcellulose, le fructose ou le glucose.

A titre d'exemple, une solution de type sol-gel utilisable est obtenue en mélangeant une première solution comprenant du butoxyde de zirconium avec du butanol et de l'acétylacétone, avec une deuxième solution comprenant du saccharose dissous dans un acide par exemple par de l'acide chlorhydrique avec ajout d'éthanol. Bien entendu, d'autres solvants pourraient être utilisés pour le butoxyde de zirconium et le saccharose permettant l'obtention d'une solution de type sol-gel pouvant imprégner la préforme fibreuse de façon sensiblement uniforme. D'autres processus connus de formation d'une solution de type sol-gel précurseur de zircone peuvent bien entendu être utilisés, notamment sans nécessiter la présence de saccharose ou autre précurseur similaire de carbone.

A l'étape 12, un séchage en étuve est réalisé pour éliminer les solvants, par exemple à une température de 60°C à 100°C et pendant une dizaine à plusieurs dizaines d'heures.

A l'étape 13, un traitement thermique est réalisé pour transformer le ou les précurseur(s) par décomposition et stabiliser le ou les composé(s) du zirconium obtenu(s) sous forme cristallisée, afin d'obtenir sous cette forme un ou plusieurs composé(s) du zirconium de type au moins majoritairement ZrOₓC_{y} avec 1 ≤ x ≤ 2 et 0 ≤ y ≤ 1. Lorsque la solution de type sol-gel comporte un précurseur de carbone, par exemple le saccharose, le traitement thermique transforme le précurseur en carbone qui reste présent dans la préforme.

Le traitement thermique est réalisé sous atmosphère neutre, par exemple sous argon ou sous azote. Il est réalisé à une température atteignant entre 600°C et 1700°C, de préférence entre 900°C et 1550°C, pendant une durée comprise entre 1 h et plusieurs dizaines d'heures, de préférence entre 2 h et 5 h. Lors du traitement thermique, une interaction chimique peut se produire entre un ou plusieurs composé(s) du zirconium issu(s) d'un ou plusieurs précurseur(s) contenus dans la solution de type sol-gel et du carbone provenant également d'un ou plusieurs composant(s) de la solution de type sol-gel ou provenant des fibres de la préforme, donnant des composés appartenant au système Zr-O-C. Le traitement thermique est contrôlé en température et en durée comme indiqué pour assurer une présence au moins majoritaire de composés ZrOₓC_{y} définis plus haut. On notera que pour la durée du traitement thermique, on pourra prendre en compte une exposition ultérieure à température élevée, comme c'est le cas lorsque la densification de la préforme par une matrice carbone est réalisée par un processus CVI puisque celui-ci est usuellement conduit à une température d'environ 1000°C. A côté des composés majoritaires ZrOₓC_{y} précités, on pourra trouver de façon minoritaire d'autres composés du système Zr-O-C et éventuellement d'autres composés de systèmes dérivant du système Zr-OC comprenant un ou plusieurs autres éléments tels que de l'azote N (notamment si une atmosphère d'azote est utilisée pendant le traitement thermique).

On obtient ainsi des cristallites nanométriques de type au moins majoritairement ZrOₓC_{y} défini plus haut, ces cristallites ayant une dimension moyenne inférieure à 200 nanomètres, par exemple de quelques nanomètres à quelques dizaines de nanomètres, et pouvant former des grains ou agrégats de plusieurs microns répartis dans le volume de la préforme.

A l'étape 14, une densification par une matrice PyC est réalisée, par exemple par un processus CVI à partir d'une phase gazeuse contenant par exemple du méthane et/ou du propane. La densification par CVI est réalisée dans une enceinte à une température d'environ 1000°C et sous une pression de préférence inférieure à 5 kPa, comme cela est bien connu en soi. Les étapes 13 de traitement thermique et 14 de densification par CVI peuvent être enchaînées dans un même four, les préformes étant laissées dans le four à la fin du traitement thermique et les conditions régnant dans le four à la fin du traitement thermique (atmosphère du four, pression et température) étant modifiées pour correspondre à celles de la densification par CVI.

En variante, la densification par une matrice carbone peut être réalisée par un procédé de type voie liquide ou de type caléfaction comme mentionné plus haut.

A l'étape 15, un traitement thermique à haute température supérieure à 1400°C peut être réalisé, comme bien connu en soi. Un tel traitement thermique est réalisé sous atmosphère neutre ou sous vide.

On obtient ainsi un disque en matériau composite C/C enrichi de cristallites en composé(s) du zirconium au moins majoritairement du type ZrOₓC_{y} précité, c'est-à-dire au moins majoritairement en zircone ou oxycarbure de zirconium riche en oxygène de composition allant de ZrO₂ à ZrOC. L'imprégnation par une solution de type sol-gel permet d'obtenir des cristallites nanométriques avec une dimension moyenne inférieure à 200 nanomètres, par exemple de quelques nanomètres à quelques dizaines de nanomètres pouvant former des agrégats ou grains de plusieurs microns répartis dans tout le volume du disque. L'imprégnation est réalisée de manière à ce que la fraction massique représentée par ces cristallites éventuellement agglomérées en grains dans le disque finalement obtenu à base de matériau composite C/C est comprise entre 1 % et 10 %.

Comme cela sera montré plus loin, la présence des cristallites éventuellement agglomérées en grains et au moins majoritairement du type ZrOₓC_{y} précité se traduit par une diminution très importante de l'usure, en comparaison avec un matériau composite C/C non enrichi en particules de céramique.

Une variante de mise en œuvre du procédé ci-avant est illustrée par la figure 2.

Cette variante se distingue du procédé de la figure 1 en ce que l'imprégnation par la composition de type sol-gel est réalisée sur une texture fibreuse en fibres de carbone (étape 10'). Après séchage (étape 11'), la texture imprégnée est utilisée pour obtenir des strates qui sont superposées et liées entre elles, par exemple par aiguilletage, pour obtenir une préforme en fibres de carbone imprégnée (étape 12'). Les étapes suivantes 13 à 15 sont inchangées.

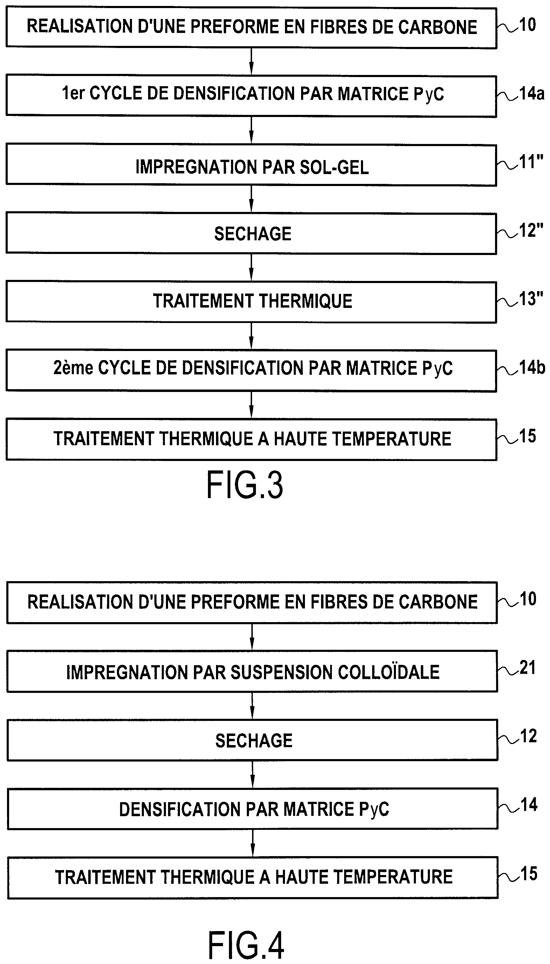

Une autre variante de mise en œuvre du procédé est illustrée par la figure 3.

Cette variante se distingue du procédé de la figure 1 en ce que la densification par matrice PyC est réalisée en deux cycles 14a et 14b. Les étapes d'imprégnation 11" par une solution de type sol-gel, de séchage 12" et de traitement thermique 13", similaires aux étapes 11, 12 et 13 du procédé de la figure 1, sont réalisées entre les deux cycles 14a et 14b. Une densification en deux cycles est connue. Après un premier cycle de densification, on peut procéder à un écroûtage visant à rouvrir la porosité de surface des préformes partiellement densifiées. L'écroûtage est alors réalisé avant l'imprégnation par la composition de type sol-gel.

Le procédé de la figure 4 se distingue de celui de la figure 1 en ce que, après l'étape 10, l'imprégnation à l'étape 21 est réalisée par une suspension colloïdale et non par une solution de type sol-gel et en ce que l'étape de traitement thermique après imprégnation peut être omise. Après l'imprégnation, le procédé se poursuit par les étapes de séchage 12, densification 14 et traitement thermique final 15 comme dans le procédé de la figure 1.

On utilise une suspension colloïdale contenant des particules d'un ou plusieurs composés de zirconium de type majoritairement ZrOₓC_{y} avec 1 ≤ x ≤ 2 et 0 ≤ y ≤ 1, ces particules étant de dimension moyenne inférieure à 200 nanomètres. Une telle suspension colloïdale peut être obtenue en faisant éventuellement réagir une poudre de zircone avec du carbone et en mettant la poudre ainsi obtenue en suspension. On pourra aussi utiliser une suspension colloïdale de zircone connue et disponible dans le commerce.

La variante de la figure 4 (utilisation d'une suspension colloïdale au lieu d'une solution de type sol-gel) peut aussi être appliquée aux procédés des figures 2 et 3.

On notera que si un traitement thermique de stabilisation du ou des composé(s) du zirconium contenu(s) dans la suspension colloïdale est souhaitable, il est réalisé en conservant une part majoritaire de composé(s) précité(s) de type ZrOₓC_{y} avec 1 ≤ x ≤ 2 et o ≤ y ≤ 1, en dépit d'une possible interaction chimique avec le carbone des fibres ou d'une phase de matrice (si l'imprégnation est réalisée entre deux cycles de densification).

Bien entendu, l'imprégnation pourra être réalisée en plusieurs fois à différents stades (texture fibreuse, préforme et/ou entre deux cycles de densification).

On notera aussi que l'imprégnation pourra être réalisée par une solution de type sol-gel et par une suspension colloïdale soit simultanément, soit respectivement à différents stades de la fabrication des pièces.

### Exemple 1 (comparatif)

Des disques de frein d'avion en matériau composite C/C ont été fabriqués comme suit.

Des préformes fibreuses ont été réalisées par superposition et aiguilletage de strates de texture fibreuse en fibres de PAN préoxydé, précurseur de carbone, comme décrit dans le document US 5 792 715. La texture fibreuse était sous forme d'une nappe multiaxiale obtenue par superposition et aiguilletage léger de trois nappes unidirectionnelles dans des directions formant entre elles des angles de 60°. Après carbonisation du précurseur, des préformes en fibres de carbone ont été obtenues avec un taux volumique de fibres de 25 % environ (pourcentage du volume apparent de la préforme occupé par les fibres).

Chaque préforme a ensuite été densifiée par une matrice PyC obtenue par CVI, la densité finale du matériau composite étant supérieure ou égale à 1,75. Un traitement thermique à haute température, supérieure à 1400°C, a été réalisé au stade final.

### Exemple 2

Des préformes en fibres de carbone ont été obtenues comme dans l'exemple 1. Chaque préforme a ensuite été imprégnée par une solution de type sol-gel à base d'un précurseur de zircone préparée de la façon suivante, le tableau ci-après indiquant les constituants de la solution et leurs proportions massiques.

| Constituants | % massique |
|---|---|
| Butoxyde de zirconium | 31,23 |
| Butanol | 17,85 |
| Acétylacétone | 8,03 |
| Solution d'acide chlorhydrique (pH = 1,6) | 21,41 |
| Saccharose | 10,77 |
| Ethanol | 10,71 |

Le butanol et le butoxyde de zirconium ont d'abord été mélangés ensemble. L'acétylacétone a été ensuite ajoutée. La solution a été maintenue sous agitation. Dans le même temps, le saccharose a été dissous sous agitation dans l'eau acidifiée au préalable par ajout de l'acide chlorhydrique pour avoir un pH de 1,6 et l'éthanol a été versé dans cette solution. Ce mélange a alors été ajouté goutte à goutte à la première solution butanol/butoxyde de zirconium/acétylacétone.

Dans un récipient, la solution sol-gel, préparée comme indiqué précédemment, a été versée sur la préforme à imprégner. Le système a été fermé par un film plastique et placé sous hotte aspirante pendant 6 h, afin d'assurer un mouillage optimum. La préforme a ensuite été séchée à 70°C pendant 24 h pour évaporer les solvants.

L'imprégnation des préformes par le sol-gel a été réalisée de manière à introduire une quantité de sol-gel représentant une fraction massique en moyenne de 44 % dans les préformes imprégnées après séchage.

Chaque préforme imprégnée et séchée a ensuite subi le traitement thermique sous azote suivant :
▪ montée à 10°C/min jusqu'à 600°C
▪ palier de 1 h 30 à 600°C
▪ montée à 2°C/min jusqu'à 1 550°C
▪ palier de 3 h à 1 550°C

Le rôle du palier à 600°C à basse pression était d'éliminer les gaz oxydants issus de la dégradation des composés organiques.

Un vide de 2,5.10⁻² mbar a dû être atteint dans le four avant de lancer le cycle thermique sous flux d'azote (débit 4 l/min). La pression d'azote a été régulée et a suivi le cycle suivant :
▪ palier de 1 h à 95 kPa
▪ descente à 5 kPa en 15 min
▪ palier de 1 h à 5 kPa
▪ montée à 95 kPa en 15 min
▪ palier de 10 h 55 à 95 kPa

Après traitement thermique, chaque préforme a été densifiée par une matrice PyC obtenue par CVI de la même façon que dans l'exemple 1.

La densité finale du matériau composite était de 1,83.

Les disques à base de matériau composite C/C obtenus contenaient une fraction massique de 4,5 % de grains formés de cristallites de dimension moyenne égale à 40 nm et les cristallites avaient pour composition ZrOₓC_{y} (proche ZrO₂ monoclinique : 83 % et ZrO₂ quadratique : 17 %, les pourcentages donnés pour les différentes phases étant des pourcentages massiques, de même que dans les exemples qui suivent)... Par "proche ZrO₂" on entend ici qu'une présence éventuelle de carbone dans la zircone ne peut totalement être exclue.

### Exemple 3

Des préformes en fibres de carbone ont été obtenues comme dans l'exemple 1. Chaque préforme a été densifiée partiellement par une matrice PyC obtenue par CVI jusqu'à obtenir une ébauche ayant une densité de 1,3.

Chaque ébauche a été imprégnée par une solution sol-gel telle qu'obtenue comme dans l'exemple 2.

L'imprégnation a été réalisée en renouvelant deux fois un même cycle comprenant une imprégnation sous vide et un séchage comme dans l'exemple 2.

Chaque ébauche imprégnée et séchée a été traitée thermiquement comme dans l'exemple 2 puis la densification par une matrice PyC obtenue par CVI a été achevée jusqu'à obtenir une densité finale du disque de 1,82.

Chaque disque obtenu finalement contenait une fraction massique de 4,35 % de grains formés de cristallites de dimension moyenne de 20 à 60 nanomètres et les cristallites avaient pour composition ZrOₓC_{y} (ZrO_{1,7}C_{y} cubique avec 0 ≤ y ≤ 0,3 : 27 %, ZrO₂ monoclinique : 58 % et ZrO₂ quadratique : 15 %).

### Exemple 4

On a procédé comme dans l'exemple 3 sauf pour le traitement thermique de chaque ébauche imprégnée et séchée qui a été réalisé comme suit.

Température : montée à 10°C/min jusqu'à 600°C et palier de 90 min à 600°C, ensuite montée à 2°C/min jusqu'à 1000°C et palier de 4 h à 1000°C.

Pression d'azote : palier de 1 h à 95 kPa, descente à 5 kPa en 15 min et palier de 1 h à 5 kPa, montée à 95 kPa en 15 min puis palier de 7 h 20 à 95 kPa.

La densité finale des disques obtenus était de 1,81.

Chaque disque obtenu finalement contenait une fraction massique de 1,34 % de cristallites de dimension moyenne de 10 à 30 nanomètres et les cristallites avaient pour composition ZrOₓC_{y} (proche ZrO₂ monoclinique : 50 % et ZrO₂ quadratique : 50 %).

Il a été constaté que les cristallites n'étaient pas agglomérées mais dispersées dans une matrice de carbone issu du saccharose.

### Exemple 5

On a procédé comme dans l'exemple 3 sauf pour le traitement thermique qui a été réalisé sous argon.

Chaque disque obtenu finalement contenait une fraction massique de 6,31 % de grains formés de cristallites de dimension moyenne de 15 nanomètres et les cristallites avaient pour composition ZrOₓC_{y} (proche ZrO₂ monoclinique : 42 % et ZrO₂ quadratique : 58 %).

### Essais 1

Les disques des exemples 1 à 5 ont été évalués tribologiquement par simulation de freinages. Par rapport à des dimensions usuelles de disques de frein d'avion, les disques utilisés étaient à échelle réduite avec un diamètre extérieur de 144 mm, un diamètre intérieur de 98 mm et une épaisseur de 14 mm.

Des énergies massiques croissantes de 16 à 500 kJ/kg ont été appliquées en imposant des vitesses initiales de 521 à 2840 tr/min et une pression de freinage de 3,2 bars.

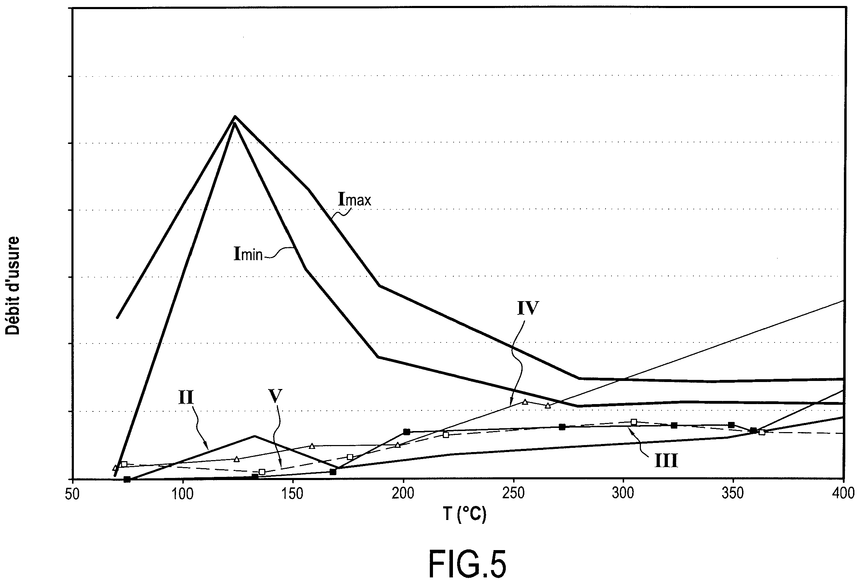

Les courbes de la figure 5 représentent le débit d'usure (diminution d'épaisseur en fonction du temps) par face frottante en fonction de la température mesurée par sonde à 1 mm au-dessous de la face frottante.

Les courbes Iₘᵢₙ et Iₘₐₓ représentent l'enveloppe des résultats obtenus avec des disques selon l'exemple comparatif 1.

La courbe II représente les résultats avec des disques selon l'exemple 2. La présence de grains de ZrCₓO_{y} avec une teneur de 4,5 % en masse dans le matériau composite C/C entraîne une diminution importante de l'usure dans toute la plage de sollicitations étudiée, en comparaison avec l'exemple 1.

La courbe III représente les résultats obtenus avec des disques selon l'exemple 3 et confirme que l'imprégnation peut être réalisée après un premier cycle de densification partielle plutôt qu'au stade préforme fibreuse sans affecter sensiblement les résultats.

La courbe IV représente les résultats obtenus avec des disques de l'exemple 4 et montre que les conditions du traitement thermique après imprégnation peuvent être variées, par exemple pour adaptation à des impératifs de production, sans affecter sensiblement les résultats. En outre, les résultats ne sont pas sensiblement affectés par le fait que les cristallites nanométriques sont dispersées dans du carbone issu du saccharose.

La courbe V représente les résultats obtenus avec des disques de l'exemple 5 et montre que l'utilisation d'une atmosphère d'argon plutôt que d'azote pour le traitement thermique n'affecte pas les résultats.

### Essais 2

Des disques des exemples 1 et 2 ont été évalués dans la même plage de sollicitations que celle des essais 1 en simulant un enchaînement de 24 "cycles avion". Un "cycle avion" comprend ici 5 freinages à froid (avant décollage), un freinage en atterrissage de service et 5 freinages à chaud (après atterrissage).

Le tableau ci-après indique en valeurs relatives les usures mesurées par face frottante et par "cycle avion" pour un ensemble de disques selon l'exemple 1 en comparaison avec l'usure z mesurée pour 1 disque selon l'exemple 2.

| | Disques selon l'exemple 1 | Disque selon l'exemple 2 |
|---|---|---|
| Usure par face par cycle | 6,45 z à 10 z | z |

Le disque de l'exemple 2 a montré une diminution d'usure de plus de 80 % par rapport à la moyenne des disques de l'exemple 1.

### Essai 3

Des éprouvettes à base de matériau composite C/C obtenues suivant les exemples 1 à 5 ont été évaluées sous sollicitations mécaniques de traction. Les éprouvettes étaient sous forme de barreaux de dimensions 130mm x 10mm x 8mm, les fibres de la texture fibreuse étant orientées à 0°, +60° et -60° par rapport à la direction longitudinale des barreaux, direction dans laquelle la traction a été exercée. L'évolution de la contrainte en fonction de la déformation observée lors des essais de traction a traduit un endommagement plus homogène des matériaux des exemples 2 à 5 élaborés suivant l'invention par rapport au matériau de l'exemple comparatif 1. Les matériaux de l'invention présentent de plus une nette amélioration de leur allongement à rupture avec pour les barreaux obtenus dans les conditions de l'exemple 5 un gain de 20% par rapport à ceux de l'exemple 1.

Ces résultats montrent l'intérêt de l'invention pour des pièces à base de matériau composite C/C non nécessairement destinées à un usage en tant que pièces de friction.

## Revendications

1. Procédé de fabrication d'une pièce à base de matériau composite carbone/carbone comprenant la réalisation d'une préforme en fibres de carbone, la densification de la préforme par une matrice de carbone et, au cours du processus de fabrication, l'introduction de grains ou particules en céramique dispersés au sein de la pièce,
**caractérisé en ce que**, préalablement à l'achèvement de la densification, il est réalisé une imprégnation par un liquide formé par une solution de type sol-gel contenant un précurseur d'un système Zr-O-C permettant, après traitement thermique, la dispersion d'un ou plusieurs composés du zirconium sous forme de cristallites et/ou par une suspension colloïdale contenant des particules d'un ou plusieurs composés du zirconium, et
**en ce que** l'imprégnation et les traitements subséquents, jusqu'à obtention de la pièce finale, sont réalisés de manière à avoir, dans la pièce finale, des cristallites ou particules qui représentent une fraction massique comprise entre 1 % et 10 % et dont la composition est au moins majoritairement de type ZrOₓC_{y} avec 1 ≤ x ≤ 2 et 0 ≤ y ≤ 1.

2. Procédé selon la revendication 1, **caractérisé en ce que** l'imprégnation est réalisée au moins en partie par une solution de type sol-gel contenant un ou plusieurs précurseur(s) du système Zr-O-C et l'on forme des grains de composés du zirconium constitués de cristallites de dimension moyenne inférieure à 200 nanomètres.

3. Procédé selon la revendication 2, **caractérisé en ce que** l'imprégnation est réalisée par une solution de type sol-gel contenant au moins un composé du zirconium précurseur de zircone.

4. Procédé selon l'une quelconque des revendications 2 et 3, **caractérisé en ce que** l'imprégnation est réalisée par une solution de type sol-gel contenant un ou plusieurs précurseur(s) de carbone.

5. Procédé selon la revendication 4, **caractérisé en ce que** l'imprégnation est réalisée par une solution de type sol-gel contenant du saccharose.

6. Procédé selon l'une quelconque des revendications 2 à 5, **caractérisé en ce qu'**après imprégnation, il est réalisé un traitement thermique de décomposition du ou des précurseur(s) et de stabilisation du ou des composés du zirconium sous une forme cristallisée, à une température atteignant entre 600°C et 1700°C, de préférence entre 900°C et 1550°C.

7. Procédé selon la revendication 1, **caractérisé en ce que** l'imprégnation est réalisée au moins en partie par une suspension colloïdale de particules de zircone.

8. Procédé selon la revendication 7, **caractérisé en ce que** les particules ont une dimension moyenne inférieure à 200 nanomètres.

9. Procédé selon l'une quelconque des revendications 1 à 8, **caractérisé en ce que** l'imprégnation est au moins en partie réalisée au stade préforme avant densification.

10. Procédé selon la revendication 9, dans lequel la préforme est réalisée par superposition de strates de texture fibreuse et liaison des strates entre elles, **caractérisé en ce que** l'imprégnation est au moins en partie réalisée sur la texture fibreuse avant superposition des strates.

11. Procédé selon l'une quelconque des revendications 1 à 10, dans lequel la densification est réalisée en plusieurs cycles consécutifs, **caractérisé en ce que** l'imprégnation est réalisée au moins en partie entre deux cycles.

12. Pièce de friction à base de matériau composite carbone/carbone comprenant des grains de céramique dispersés au sein du matériau, obtenue par le procédé de l'une quelconque des revendications 1 à 11, la pièce étant **caractérisée en ce que** les grains sont formés de cristallites de dimension moyenne inférieure à 200 nanomètres.

## Patentansprüche

1. Verfahren zur Herstellung eines Teils auf der Basis von Kohlenstoff/Kohlenstoff-Verbundwerkstoff, umfassend das Herstellen eines Kohlenstofffaser-Vorformlings, das Verdichten des Vorformlings durch eine Kohlenstoffmatrix sowie, im Laufe des Herstellungsprozesses, das Einbringen von Keramikkörner oder -partikeln, die innerhalb des Teils verteilt sind,
**dadurch gekennzeichnet, dass** vor Beendigung des Verdichtens ein Imprägnieren mit einer Flüssigkeit durchgeführt wird, welche durch eine Lösung vom Sol-Gel-Typ, die einen Vorläufer eines Zr-O-C-Systems enthält, der nach der Wärmebehandlung das Dispergieren einer oder mehrerer Zirkoniumverbindung(en) in Form von Kristalliten ermöglicht, und/oder durch eine kolloidale Suspension gebildet ist, die Partikel einer oder mehrerer Zirkoniumverbindung(en) enthält, und
dass das Imprägnieren und die anschließenden Behandlungen bis zum Erhalt des endgültigen Teils derart durchgeführt werden, dass in dem endgültigen Teil Kristallite oder Partikel vorhanden sind, die einen Massenanteil im Bereich zwischen 1 % und 10 % ausmachen und deren Zusammensetzung wenigstens überwiegend vom Typ ZrOₓC_{y}, mit 1 ≤ x ≤ 2 und 0 ≤ y ≤ 1 ist.

2. Verfahren nach Anspruch 1, **dadurch gekennzeichnet, dass** das Imprägnieren wenigstens teilweise mit einer Lösung vom Sol-Gel-Typ durchgeführt wird, die einen oder mehrere Vorläufer des Zr-O-C-Systems enthält, und Körner aus Zirkoniumverbindungen gebildet werden, die aus Kristalliten mit einer durchschnittlichen Abmessung von weniger als 200 Nanometern bestehen.

3. Verfahren nach Anspruch 2, **dadurch gekennzeichnet, dass** das Imprägnieren mit einer Lösung vom Sol-Gel-Typ durchgeführt wird, die wenigstens eine Zirkoniumoxidvorläufer-Zirkoniumverbindung enthält.

4. Verfahren nach einem der Ansprüche 2 und 3, **dadurch gekennzeichnet, dass** das Imprägnieren mit einer Lösung vom Sol-Gel-Typ durchgeführt wird, die einen oder mehrere Kohlenstoffvorläufer enthält.

5. Verfahren nach Anspruch 4, **dadurch gekennzeichnet, dass** das Imprägnieren mit einer Lösung vom Sol-Gel-Typ durchgeführt wird, die Saccharose enthält.

6. Verfahren nach einem der Ansprüche 2 bis 5, **dadurch gekennzeichnet, dass** nach dem Imprägnieren eine Wärmebehandlung zum Zerlegen des oder der Vorläufer(s) und zur Stabilisierung der Zirkoniumverbindung(en) in einer kristallisierten Form bei einer Temperatur, die zwischen 600 °C et 1700 °C, vorzugsweise zwischen 900 °C et 1550 °C erreicht, durchgeführt wird.

7. Verfahren nach Anspruch 1, **dadurch gekennzeichnet, dass** das Imprägnieren wenigstens teilweise mit einer kolloidalen Suspension aus Zirkoniumoxidpartikeln durchgeführt wird.

8. Verfahren nach Anspruch 7, **dadurch gekennzeichnet, dass** die Partikel eine durchschnittliche Abmessung von weniger als 200 Nanometern aufweisen.

9. Verfahren nach einem der Ansprüche 1 bis 8, **dadurch gekennzeichnet, dass** das Imprägnieren wenigstens teilweise im Vorformlings-Stadium vor dem Verdichten durchgeführt wird.

10. Verfahren nach Anspruch 9, bei dem der Vorformling hergestellt wird, indem Faserstrukturschichten übereinandergelegt und die Schichten untereinander verbunden werden, **dadurch gekennzeichnet, dass** das Imprägnieren wenigstens teilweise auf der Faserstruktur vor dem Übereinanderlegen der Schichten durchgeführt wird.

11. Verfahren nach einem der Ansprüche 1 bis 10, bei dem das Verdichten in mehreren aufeinanderfolgenden Zyklen durchgeführt wird, **dadurch gekennzeichnet, dass** das Imprägnieren wenigstens teilweise zwischen zwei Zyklen durchgeführt wird.

12. Reibungsteil auf der Basis von Kohlenstoff/Kohlenstoff-Verbundwerkstoff, umfassend Keramikkörner, die innerhalb des Materials verteilt sind, erhalten durch das Verfahren nach einem der Ansprüche 1 bis 11, wobei das Teil **dadurch gekennzeichnet ist, dass** die Körner von Kristalliten mit einer durchschnittlichen Abmessung von weniger als 200 Nanometern gebildet sind.

## Claims

1. A method of fabricating a part based on carbon/carbon composite material, the method comprising making a preform of carbon fibers, densifying the preform with a carbon matrix, and during the fabrication process, introducing grains or particles of ceramic dispersed within the part,
**characterized in that**, prior to completing densification, impregnation is performed using a liquid formed of a sol-gel type solution containing a precursor of a Zr-O-C system enabling, after heat treatment, one or more zirconium compounds to be dispersed in crystallite form and/or a colloidal suspension containing particles of one or more zirconium compounds, and
**in that** the impregnation and the subsequent treatments, until the final part is obtained, are performed in such a manner as to have, in the final part, crystallites or particles representing a percentage by weight lying in the range 1% to 10% and of composition having at least a majority of the ZrOₓC_{y} type with 1 ≤ x ≤ 2 and 0 ≤ y ≤ 1.

2. A method according to claim 1, **characterized in that** impregnation is performed at least in part by a sol-gel type solution containing one or more precursor(s) of the Zr-O-C system, and grains of zirconium compounds are formed that are constituted by crystallites of mean size less than 200 nanometers.

3. A method according to claim 2, **characterized in that** the impregnation is performed with a sol-gel type solution containing at least one zirconia-precursor zirconium compound.

4. A method according to any one of claims 2 and 3, **characterized in that** the impregnation is performed by a sol-gel type solution containing one or more precursors of carbon.

5. A method according to claim 4, **characterized in that** the impregnation is performed with a sol-gel type solution containing saccharose.

6. A method according to any one of claims 2 to 5, **characterized in that** after impregnation, heat treatment is performed to decompose the precursor(s) and to stabilize the zirconium compound(s) in a crystallized form, at a temperature rising to the range 600°C to 1700°C, and preferably in the range 900°C to 1550°C.

7. A method according to claim 1, **characterized in that** the impregnation is performed at least in part with a colloidal suspension of zirconia particles.

8. A method according to claim 7, wherein the particles have a mean size of less than 200 nanometers.

9. A method according to any one of claims 1 to 8, **characterized in that** the impregnation is performed at least in part during the preform stage, prior to densification.

10. A method according to claim 9, **characterized in that** the preform is made by superposing plies of fiber texture and bonding the plies together, and **in that** the impregnation is performed at least in part on the fiber texture prior to superposing the plies.

11. A method according to any one of claims 1 to 10, wherein the densification is performed in a plurality of consecutive cycles, **characterized in that** the impregnation is performed at least in part between two cycles.

12. A friction part based on carbon/carbon composite material including grains or particles of ceramic dispersed within the material and obtained by the method according to any one of claims 1 to 11, the part being **characterized in that** grains are formed of crystallites having a mean size of less than 200 nanometers.
